# EUROPEAN PATENT APPLICATION

(11) **EP 2 982 584 A1**
(43) Date of publication of application: **10.02.2016**
(21) Application number: 15178942.7
(22) Date of filing: 29.07.2015
(51) Int. Cl.: B62J 17/06

(54) **LEG COVER FOR A MOTORCYCLE**

(30) Priority: 04.08.2014 IT MI20141427
(71) Applicant: Tucano Urbano S.r.l., 20068 Peschiera Borromeo (MI) (IT)
(72) Inventor: TAMBASCIA, Mirko, I-20068 Peschiera Borromeo (MI) (IT)
(74) Representative: Marietti, Andrea

(57) **Abstract**

Leg cover (1) for motorcycles, of the type provided with an outer layer (2) that is waterproof and/or thermally insulating, comprising at least one portion (3, 3a, 3b) combinable with the upper part of the user's legs, at least two side limbs (4a, 4b) combinable with the lower part of the user's legs and means for removably constraining the leg cover (1) to a motorcycle wherein said leg cover (1) comprises at least one adjusting chamber (6) expandable and contractible that is placed under said outer layer (2) and in correspondence to said at least one portion (3, 3a, 3b) combinable with the upper part of the user's legs.

## Description

### Field of the Invention

The present invention relates to a leg cover for motorcycles and in general for vehicles with no passenger compartment, such as mopeds, motor vehicles, quad-bikes (or quads), etc. Preferably, the present invention relates to a leg cover of the type removably constrainable to a moped.

It has to be noted that by the term "leg cover" herein and in the following is meant a substantially flexible cover constrainable to a motorcycle, such as a moped or motor vehicle or other vehicle having two or more wheels with no passenger compartment, and made in a waterproof and/or thermally insulating material, and shaped so that to at least partially protect the front portion of the legs, by covering them, of the driver and/or passenger of the moped, motor vehicle, or other vehicle having no passenger compartment, to which it is applied. Such a cover can extend to protect also part of the pelvis and/or abdomen of the driver and/or passenger of the vehicle it is constrained to.

It has to be further observed that in the following, for the sake of simplicity, the application of the leg cover according to the present invention will refer to general "motorcycles", although with such a term any vehicle having two or more wheels with no passenger compartment closed to the outer environment will be more generally meant.

### Known previous art

For many people motorcycles, especially mopeds, are almost became the main means of transport for easily moving in the town traffic. For some people, the moped has also become a need in the professional environment, for example delivery boys, postmen or in general people that have to move inside the town many times a day for work. Thanks to the reduced sizes with respect to cars, mopeds allow saving time in traveling traffic-congested roads and more easily finding a parking.

Even mopeds have some disadvantages and, in particular, the main disadvantage consists in the driver being exposed to elements, such as rain, snow, cold, which in some geographical areas can occur very frequently during the year.

In order to compensate for this disadvantage and drive the moped in any period of the year, different types of equipment have been developed that allow protecting the driver against bad weather conditions. For example leg covers are known, i.e. flexible covers adapted to cover the legs and sometimes also part of the driver's abdomen. Some leg cover can be worn by the driver by wrapping the cover around the waist and legs as if it is a skirt, to achieve a shelter from rain and cold. Such leg covers can however limit the driver's movements, for example if he/she has to rest the feet on the ground when the moped is stopped.

In order to improve the user's freedom of movement leg covers are known that are removably constrained to the moped by means, for example, of hooks, strings, buckles. Such leg covers comprise a portion adapted to be constrained to the front of the moped (in proximity and/or at the sides of the handlebar), a free portion extending towards the rear of the moped until covering the saddle and two side limbs falling laterally down to the platform intended to host the driver's feet. This way the driver can place himself/herself below the leg cover without the need of wearing it. Such a solution, while improving the freedom of movement of the driver inside the leg cover, can however become uncomfortable depending on the height and/or the physique of different drivers.

In fact, once the leg cover has been fastened to the moped, the leg cover portion combinable with the upper part of the driver's legs partially follows the shape of the moped front where the leg cover is fastened. Such a portion of leg cover will be therefore more or less spaced from the driver's legs depending on the body size of the same driver. In other words, a high and/or stout driver will occupy a larger volume inside the cover than a shorter and/or slighter driver. Such a volume difference translates into a difference of leg cover adhesion to the legs of drivers having different body sizes. For example it has been noted that shorter and/or slighter drivers, by using a leg cover of the type constrainable to the moped or general motorcycle, find a lower convenience i.e. a lower comfort when driving with respect to taller and/or stouter drivers. Therefore the need arises of adapting the leg cover to different driver's body sizes.

A solution is that of pulling the cover more or less towards the driver's legs by means of tie rods or additional like means that modify the way the leg cover is fastened to the moped. Such solutions, while being able to adapt the leg cover to the driver's body size, ruin however the leg cover appearance as well as the aerodynamics it has been designed with and, in other cases, can also lead to the formation of weaknesses for the leg cover waterproofness with subsequent infiltration of water inside the cover.

### Summary of the invention

Object of the present invention is to overcome problems of the known previous art shortly discussed above, and to provide a leg cover able to guarantee the driver a higher freedom of movements and, at the same time, a higher driving comfort with respect to the known previous art.

Additional object of the present invention is to provide a leg cover of the type constrainable to the moped and able to easily adapt to drivers having different body sizes, with a higher aerodynamics and better aesthetics with respect to solutions provided by the known previous art.

These and other objects are achieved by the present invention by means of a leg cover according to claim 1, and the respective dependent claims.

In particular, according to the present invention, the motorcycle leg cover is of the type provided with at least one waterproof and/or thermally insulating outer layer, and comprising at least one portion combined with the upper part of the user's legs, and at least two side limbs combined with the lower part of the user's legs, as well as means for removably constraining such leg cover to the motorcycle. Characteristic aspect of the present invention is that the leg cover comprises at least one expandable and contractible adjusting chamber placed under the outer layer and in correspondence to the portion combinable with the upper part of the user's legs, to adapt the inner conformation, i.e. the sizes and/or geometry of the volume engaging the users legs, of said leg cover to the bulk - i.e. substantially the volume occupied under said leg cover - of the user's legs.

Thanks to this solution, the difference in the volume occupied inside the leg cover by passengers having different physiques can be compensated for by leaving the conformation of the outer layer of the leg cover substantially unchanged. As such, in addition to obtaining a better aesthetics with respect to solutions provided by the known art, the leg cover holds its aerodynamics it has been designed with. Once the cover has been constrained to the moped, the expansion and contraction of the adjusting chamber do not produce changes to the conformation of the outer layer that could cause water infiltrations inside the volume occupied by the driver's legs.

In particular, according to a preferred aspect of the present invention, the leg cover comprises means for reversibly and extemporaneously adjusting the expansion and contraction of one or more adjusting chambers so that to compensate for the difference of volume occupied by passengers having different physiques. For example, in case of a slight passenger, i.e. which taking up a reduced volume under the leg cover, the expansion of one or more adjusting chambers could be adjusted and controlled to improve the leg cover adhesion to the driver's legs and substantially ensure the same comfort perceived by a stouter passenger.

Such an adjustment, as it will be evident in the following, can be carried out from time to time by the user, thus extemporaneously and reversibly adapting sizes of the inner volume of the leg cover, i.e. its inner conformation, to sizes of the user's legs.

An additional advantage of the present invention is that the expansion and contraction adjustment of one or more adjusting chambers, is held also after removing the leg cover from the motorcycle. Therefore a driver having a determined physique, which carried out a determined adjustment of one or more adjusting chambers, will be able to remove the leg cover from the moped without the need of adapting once again the leg cover to his/her physique when the leg cover is fastened back to the motorcycle. Such a feature is very favorable for example in case the leg cover has to be fastened to the moped and removed therefrom frequently or periodically.

The expansion and the contraction of one or more adjusting chambers can be carried out by the inflow of a fluid (for example air) into one or more adjusting chambers or by means of at least one expander element placed inside one or more adjusting chambers. For example such an expander element can be an inflatable or synthetic insulating material preferably shaped and/or sized depending on the user's body size. According to a further aspect of the present invention, the leg cover comprises a comfort inner layer that can be spaced at least in part from the outer layer to define one or more adjusting chambers.

Still according to another aspect of this invention, a method is suggested herein for adapting to an user the inner conformation of a leg cover of the type provided with at least one outer layer, that is waterproof and/or thermally insulating, and comprising at least one portion combined with the upper part of the user's legs, and at least two side limbs combined with the lower part of the user's legs, as well as means for removably constraining such a leg cover to the motorcycle, and wherein the leg cover comprises at least one expandable and contractible adjusting chamber placed under the outer layer and in correspondence to the portion combinable with the upper part of the user's legs. Advantageously, the method provides a step of a) reversible expansion or contraction of the volume of said at least one adjusting chamber depending on the bulk, i.e. the sizes, of said user's legs and then a step of b) arranging the leg cover in an operative position, wherein said at least one adjusting chamber is arranged in correspondence to the upper part of the legs of said user.

According to a further preferred aspect of the method of the invention, when a new user wants to use said leg cover, this provides for a step of c) further expansion or contraction of the volume of said at least one adjusting chamber, before the step of d) arranging the leg cover in an operative position wherein said at least one adjusting chamber is arranged in correspondence to the upper part of the legs of said new user. It has to be noted that with the term "adapting the inner conformation" of the leg cover herein and in the following the change, in sizes and/or geometry, of the inner surface of the leg cover is meant, so that to change the inner volume, defined by the leg cover itself and inside which the user's legs are housed, when the leg cover is in its operative position whereby it wraps the legs of the motor vehicle user.

### Brief Description of the Drawings

Further aspects and advantages of the present invention will be more evident from the following description, made for illustration purposes only and without limitation referring to the accompanying schematic drawings, in which:
- figure 1 is a perspective view of the leg cover according to the present invention;
- figure 2 is a perspective view of the leg cover according to the present invention, when it is fastened to a moped;
- figures 3-7 are sectional views of five different embodiments of the leg cover according to the present invention;
- figures 8, 9A, 9B show the leg cover according to the present invention fastened to a moped in two cases: with a driver A on board and with a driver B on board, where the driver A has larger body size than the driver B.

### Modes for implementing the invention

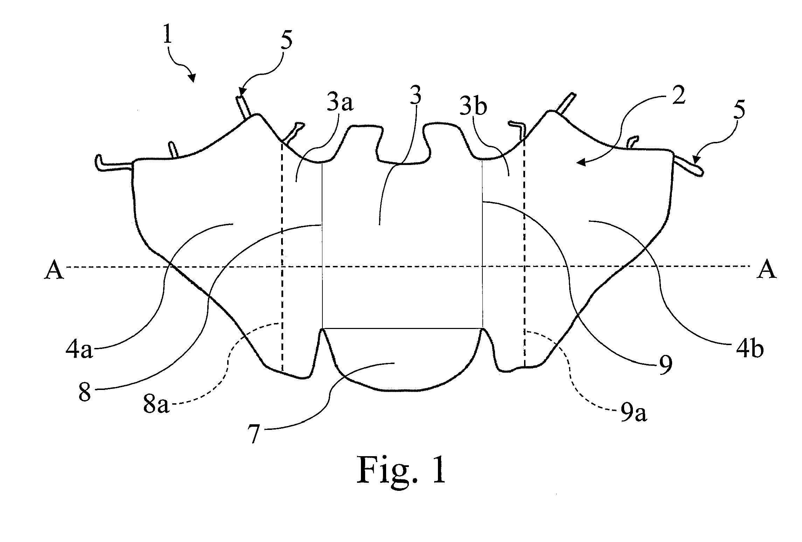

Figure 1 shows a leg cover 1 for motorcycles of the type composed of a cover comprising at least one middle portion 3, 3a, 3b combinable with the upper part of the user's legs, and at least two side limbs 4a, 4b combinable with the lower part of the user's legs, as well as means 5 for removably constraining the leg cover 1 to the motor cycle 10, and at least one waterproof and/or thermally insulating outer layer 2 that defines on top, or helps in defining, the aforesaid middle portion 3, 3a, 3b and the two side limbs 4a, 4b.

It has to be noted that the leg cover 1, as it will be seen, can comprise as well, at least in correspondence to the afore said middle portion 3, 3a, 3b, not only the protective outer layer 2, i.e. waterproof and/or thermally insulating, but also a so called "comfort" inner layer 11 intended for resting at least in part on the limbs or other portions of the user's body, and that can be constituted of the same material composing the outer layer 2, but that preferably is composed of a softer and more elastic material, and thus being more pleasant when resting on the user's legs with respect to the material constituting the protective outer layer 2.

The leg cover 1 is shown in figure 1 as deployed on a flat surface, i.e. so that the outer layer 2 is totally visible. The leg cover 1 comprises two side limbs 4a, 4b integral with the portion 3. For example, the limbs 4a, 4b can be realized as a single piece with the portion 3 or they can be sewn and/or glued to the portion 3 of the leg cover 1. The leg cover can further comprise a portion 7 (also integral with the portion 3) adapted to cover at least partially the user's abdomen, when the leg cover is in an operative condition. The borders among the portion 3 and the limbs 4a and 4b are represented in figure with a full line and depicted respectively with numeral references 8 and 9. The portion 3 is a portion of leg cover 1 adapted to be positioned over the upper part of the user's legs. Herein as upper part of the leg, the part of the leg substantially from the hip to the knee of the user will be meant, whereas as lower part of the leg, the part of the leg substantially from the knee to the foot will be meant.

The portions 3a and 3b, respectively delimited by the borders 8, 9 and the dotted lines 8a, 9a, are portions of the limbs 4a and 4b, respectively. Such portions are adapted to laterally cover the upper part of the legs. Thus both the portion 3 and the portions 3 a, 3b are portions of the leg cover 1 combinable with the upper part of the driver's legs, i.e. they are portions of the leg cover 1 adapted to cover on top and laterally the part of the legs from the driver's hips to the knees.

Similarly, the side limbs 4a and 4b are combinable with the lower part of the legs, in fact they are adapted to laterally cover the part of the legs from the driver's knees to the feet.

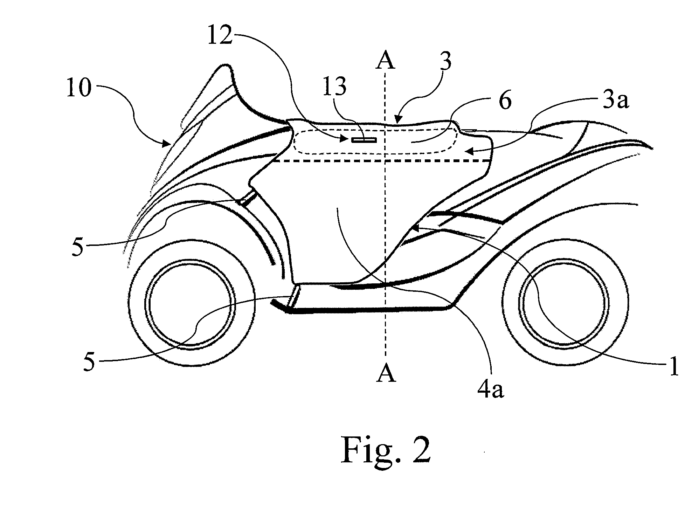

Figure 2 shows the leg cover fastened to a motorcycle 10 through the means 5 known per se in the art and that can comprise for example strings, buckles, bands, Velcro and similar fastening means.

Advantageously, according to a particular aspect of the present invention, the leg cover 1 comprises at least one reversibly and extemporaneously expandable and contractible adjusting chamber 6 placed under the outer layer 2.

Preferably, one or more adjusting chambers 6 are provided in correspondence to at least one portion 3, 3a, 3b combinable with the upper part of the user's legs. This allows adjusting the conformation taken internally by the leg cover 1, i.e. the inner sizes and/or geometry thereof, depending on the volume of the adjusting chamber/s 6 the user is able to adjust by expanding or contracting to a larger or smaller extent such chamber(s) 6.

In figure 2 at least one adjusting chamber 6 is schematically shown and enclosed by a dotted line.

It has to be noted that by the term "under the outer layer 2", referred to the adjusting chamber 6, is meant any arrangement of such a chamber 6 being under the upper surface of such outer layer 2, and thus for example also comprising that arrangement according to which the chamber 6 can also be buried inside the outer layer 2, provided that being under the upper surface of the latter.

Such a solution implies that the expansion or contraction of such a chamber 6, or chambers 6, substantially allows varying the inner conformation of the leg cover 1, i.e. allows changing the sizes and/or geometry of the inner volume defined by the same leg cover (the one surrounding the user's legs), so as to adapt such a conformation to the sizes of the legs of the user himself.

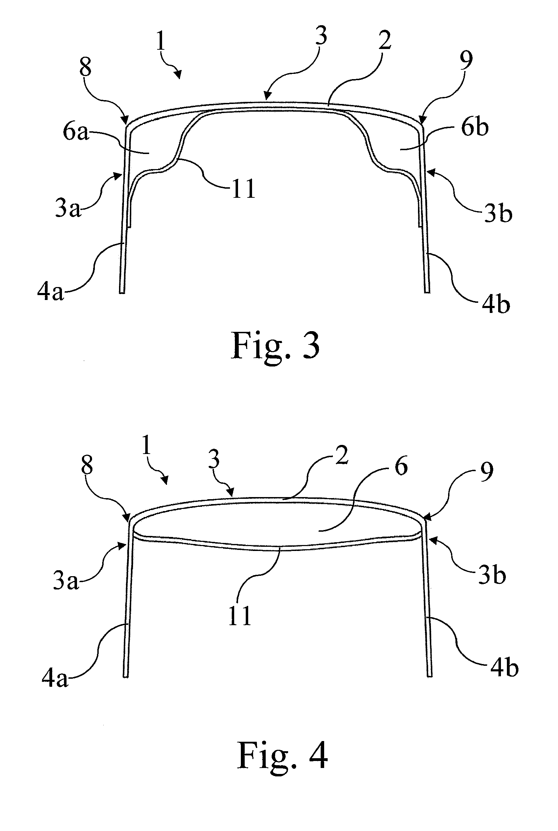

Figures 3-7 show some possible embodiments of the leg cover 1 according to the present invention. In particular, figures 3-7 are cross sections of the leg cover 1 along the cut plane A-A shown in figure 1 and in figure 2.

Referring to figures 3-7, the leg cover 1 comprises a comfort inner layer 11 that can be at least partially spaced from the outer layer 2 to define at least one adjusting chamber 6, 6a, 6b. For a clearer visualization, the adjusting chambers shown in figures 3-7 are shown in an expanded state, i.e. with the inner layer 11 spaced from the outer layer 2. In fact when the adjusting chambers are contracted, the inner layer 11 is substantially contacting the outer layer 2 of the leg cover 1 and, consequently, the adjusting chambers would be poorly visible from the figures.

Figure 3 shows a leg cover 1 comprising two adjusting chambers 6a, 6b arranged under the outer layer 2. In particular, the chamber 6a is arranged in correspondence to the portions 3, 3a, whereas the adjusting chamber 6b is arranged in correspondence to the portions 3, 3b. In this embodiment the chambers 6a and 6b are arranged respectively next to the border 8 and 9 between the portion 3 combinable with the upper part of the user's legs and the side limbs 4a, 4b combinable with the lower part of the driver's legs.

Further embodiments can provide that the chambers 6a, 6b are arranged respectively in correspondence to the portions 3a and 3b only. Further embodiments can provide that the adjusting chambers 6a, 6b are arranged respectively in correspondence to the portion 3 only and in the proximity of the border 8 and 9.

Figure 4 shows a further embodiment of the leg cover 1 wherein there is a single adjusting chamber 6 arranged in correspondence to the portions 3, 3a and 3b. In this case, the adjusting chamber 6 is defined between the outer layer 2 and the inner layer 11 that can be spaced from the outer layer 2 along the whole portion 3 of leg cover 1.

The layer 11 can be further spaced from the layer 2 in correspondence to the portions 3a and 3b.

Additional embodiments can provide an adjusting chamber 6 wherein the layer 11 can be spaced from the layer 2 only in correspondence to the portion 3, still remaining in the protection scope of the present invention. The chamber 6 is thus arranged in correspondence to both the borders 8, 9, i.e. it extends between the limbs 4a, 4b under the outer layer 2 in correspondence to the portion 3. Such a solution allows adapting the comfort layer 11 to the driver's legs by modulating a surface of the comfort layer 11 more extended with respect to the embodiment shown in figure 1.

In general, the leg cover 1 comprises at least one adjusting chamber 6, 6a, 6b placed under the outer layer 2 and in correspondence to at least one portion 3, 3a, 3b combinable with the upper part of the user's legs.

It has to be noted that, preferably, the chambers 6, 6a, 6b are tubular and elongated and have a preferential development direction substantially parallel to the direction along which the upper part of the user's legs is arranged.

The leg cover 1 further comprises means 12 for reversibly and extemporaneously adjusting the expansion and the contraction of at least one adjusting chamber 6, 6a, 6b. Such means 12 can comprise for example at least one valve 13 (visible for example in figure 2) for the inflow of a fluid, such as for example and preferably air, into one or more of the adjusting chambers 6, 6a, 6b.

By means of one or more valves 13 (preferably one for each adjusting chamber), the user can inflate (expand) and deflate (contract) one or more adjusting chambers 6, 6a, 6b so that to suitably adapt the comfort layer 11 of the leg cover 1, i.e. the inner conformation of the latter, to his/her own legs. In this case the user can control, from time to time and reversibly, the expansion and contraction of one or more adjusting chambers by the inflow of more or less fluid (for example air) into each adjusting chamber 6, 6a, 6b.

It has to be noted that the valves 13 can be of the type commonly used to extemporaneously inflate balloons or other small volume inflatables, i.e. those not assistedly-operated valves the user can use simply by blowing inside them.

The means 12 for adjusting the expansion and the contraction of one or more adjusting chambers 6, 6a, 6b can also comprise at least one expander element 14, 14a, 14b placed inside at least one adjusting chamber 6, 6a, 6b and, for example, inflated and deflated by means of an air inflow/outflow valve.

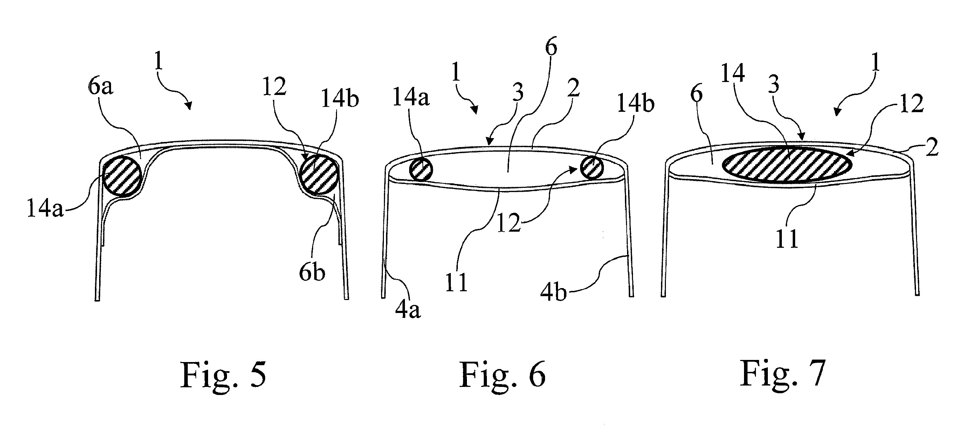

With reference to figure 5, the leg cover 1 is substantially the same as the one shown in figure 3, but inside the adjusting chambers 6a and 6b there are the expander elements 14a and 14b, respectively. In this case the expansion and contraction of the adjusting chambers 6a, 6b are adjusted by means of the expander elements 14a, 14b. Such expander elements 14a, 14b can be mere inflatables, i.e. elastic balloons, in which a fluid, such as for example air or water, can be introduced and let vent in a controlled manner.

It has to be noted that, although in the embodiments of the present invention herein illustrated the adjusting chamber or chambers 6, 6a, 6b or the expander element or elements 14, 14a, 14b are expanded or contracted by adjusting the inflow or outflow of a fluid, preferably air, from the inside thereof, other means known to the art can be used as well, without departing from the protection scope herein claimed.

For example, the adjusting chambers 6, 6a, 6b could simply allow the reversible insertion and retention of variously shaped profiles - volumes - the user can select depending on his/her own body size.

As an additional example, the adjusting chambers 6, 6a, 6b or the expander elements 14, 14a, 14b could alternatively be provided with mechanical means, for example a sort of ratchet, that easily allow the expansion and the contraction thereof.

Also in those cases, an adjustment of the volume of the adjusting chambers 6, 6a, 6b is obtained and determines a change of the inner conformation of the leg cover 1, in terms of sizes and/or geometry, that in its own turn allows adjusting the same leg cover 1 to the various sizes of the legs of the various users of such a leg cover 1.

The user will thus be able to select, for example by inflating or deflating the adjusting chamber or chambers 6, 6a, 6b, the most comfortable inner conformation of the leg cover 1, and in particular of its comfort layer 11, depending on the size of his legs.

In figure 6 and in figure 7 two more embodiments of the leg cover 1 according to the present invention are shown.

The leg cover 1 shown in figure 6 and in figure 7 is substantially the same as the one shown in figure 4, i.e. with a single adjusting chamber 6. In particular with reference to figure 6 the leg cover 1 has, inside the adjusting chamber 6, two expander elements 14a, 14b arranged in correspondence to the side limbs 4a, 4b. In this embodiment it is thus possible controlling the expansion and contraction of the adjusting chamber 6 by means of the expander elements 14a, 14b so as to be able to space out, in correspondence to the portion 3 of the leg cover 1, the whole inner comfort layer 11 from the outer layer 2 also asymmetrically, for example by expanding the expander elements 14a, 14b differently one from another.

In reference to the embodiment of figure 7, the leg cover 1 has an adjusting chamber 6 with only one expander element 14 placed substantially in the middle of the adjusting chamber 6. Such an embodiment allows spacing the layer 11 from the outer layer 2 in correspondence to the portion 3 of the leg cover, i.e. over the upper part of the driver's legs, and obtaining a larger adhesion of the layer 11 also between the driver's legs. As mentioned, the expander elements 14, 14a, 14b shown in figures 5-7 can be for example elements inflatable by means of the valves 13. In this case the valves 13 are adapted for the inflow of a fluid (for example air) into the expander element 14, 14a, 14b. Such a solution allows expanding one or more adjusting chambers 6, 6a, 6b by the inflow of a smaller amount of fluid with respect to the embodiments shown in figures 3 and 4.

Advantageously, the expander elements 14, 14a, 14b can be removed from each adjusting chamber 6, 6a, 6b for a possible replacement. Such a solution is very advantageous in case the outer layer 2 would be damaged in proximity of one or more adjusting chambers 6, 6a, 6b. A damage of the layer 2, also as a consequence of servicing, could make one or more adjusting chambers 6, 6a, 6b no more sealed and, in case of the embodiments of figures 3 and 4, the possibility of adjusting the expansion of the damaged chamber could be lost. The presence of at least one expander element 14, 14a, 14b removable from the adjusting chamber 6, 6a, 6b solves this problem. In fact, thanks to the only replacement of one or more expander elements 14, 14a, 14b, the leg cover 1 can be made operative also when the outer layer 2 has been damaged. Additional embodiments can provide a number of adjusting chambers 6, 6a, 6b and/or a number of expander elements 14, 14a, 14b different from the embodiments shown in the figures, still remaining in the protection scope of the present invention.

In general, according to a preferred aspect of the present invention, the means 12 for reversibly controlling or adjusting the expansion and contraction of said at least one adjusting chamber 6, 6a, 6b can comprise at least one valve 13 for the inflow of a fluid into said at least one adjusting chamber 6, 6a, 6b and/or at least one expander element 14, 14a, 14b, if it is present.

Additional embodiments, as already mentioned, can provide that at least one adjusting chamber contains a synthetic insulating material, preferably an expanded polymer. For example in case the expander elements are of removable type, the presence of at least one expander element 14, 14a, 14b made of synthetic insulating material, preferably an expanded polymer, can be provided for. For example, at least one expander element can be shaped with sizes and shapes suitable for the body shape of a certain driver. As will be evident from what described above, the above described leg cover 1 thus allows adapting its own inner conformation, i.e. the inner sizes and/or geometry at least of the comfort layer 11, to every single user that wants to use the leg cover 1 itself on his/her own motor vehicle.

Therefore, such a leg cover 1 allows carrying out the following steps of a method for adapting the inner conformation of the same leg cover 1 to a user:
a) reversibly expanding or contracting the volume of the adjusting chamber 6 or adjusting chambers 6a, 6b depending on sizes of the user's legs; and subsequently
b) arranging the leg cover 1 on the motor vehicle in such an operative position that the adjusting chamber, or adjusting chambers 6, 6a, 6b, is/are arranged in correspondence to the upper part of the user's legs.

As it will be evident from what described above, the first step denoted by a) can be easily carried out by a user of the leg cover 1 thanks to the afore said means 12 for reversibly and extemporaneously adjusting the expansion or contraction of the adjusting chamber, or chambers, 6, 6a, 6b. For example, when the chamber or the chambers 6, 6a, 6b are filled with air and the adjusting means 12 consist in a simple and not-assistedly operated valve, the user can simply blow into the valve and open the same in order to expand or contract the chambers 6, 6a, 6b, thereby adapting the volume thereof, and thus the inner conformation of the leg cover 1, to the sizes of the same user's legs.

Of course, when a new user wants to use the leg cover 1, the aforesaid method provides the steps of:
c) reversibly expanding or contracting the volume of the adjusting chamber, or chambers 6, 6a, 6b, depending on the sizes of the legs of the new user; and then
d) arranging the leg cover in such an operative position that the adjusting chamber, or chambers 6, 6a, 6b, is/are arranged in correspondence to the upper part of the legs of the new user.

Thus, depending at least on the sizes of the legs of the user of the leg cover 1, the conformation of the leg cover 1 itself can be easily adapted so as to prevent it from being too much enveloping with the possibility that, during the vehicle run, it can be not perfectly adherent to the user or too little enveloping, with the possibility that such a leg cover 1 does not adequately protect the user himself/herself.

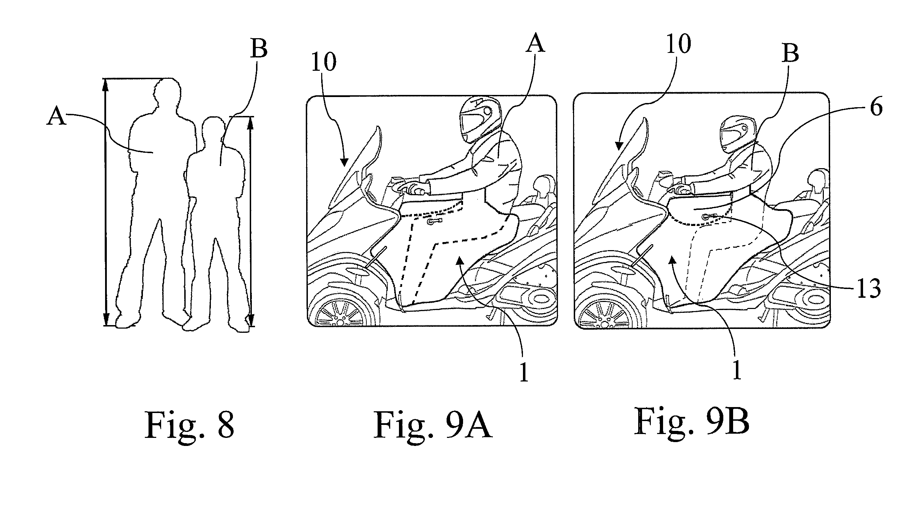

For example, in figure 8 two drivers A and B are shown, wherein the driver A has a body size (height and/or physique) larger than the driver B. Figures 9A and 9B respectively show the driver A and the driver B on board of the same moped 10 with the same leg cover 1.

Thanks to at least one adjusting chamber 6 it is possible compensating for the difference of the volume occupied inside the leg cover 1 by the passengers A and B having different physiques, thereby leaving substantially unchanged the conformation of the outer layer 2 of the leg cover 1. Therefore the passenger B (figure 9B), i.e. that one occupying a reduced volume under the leg cover 1, can advantageously adjust the expansion of one or more adjusting chambers 6 to improve the adhesion of the leg cover 1 on his/her own legs and perceive substantially the same comfort perceived by the passenger A (figure 9A).

Therefore, for example in case of the embodiment wherein the expansion of at least one adjusting chamber occurs by the inflow of a fluid into one or more adjusting chambers, the driver B can inflow the fluid into one or more adjusting chambers by means of at least one valve 13, in order to space the inner layer 11 from the outer layer 2 suitably to his physique.

Advantageously, the adjustment can be held also after the removal of the leg cover 1 from the motor cycle 10, so that the driver B will not have to once again adapt the leg cover 1 to his/her physique when the leg cover 1 will be fastened back to the motorcycle 10.

## Claims

1. Leg cover (1) for motorcycles, of the type provided with at least one outer layer (2) that is waterproof and/or thermally insulating, and which comprises at least one portion (3, 3a, 3b) combinable with the upper part of the user's legs, and at least two side limbs (4a, 4b) combinable with the lower part of the user's legs, as well as means (5) for removably constraining the leg cover (1) to a motorcycle (10), **characterized in that** said leg cover (1) comprises at least one adjusting chamber (6, 6a, 6b) expandable and contractible that is placed under said outer layer (2) and in correspondence to said at least one portion (3, 3a, 3b) combinable with the upper part of the user's legs, to adapt the inner conformation of said leg cover to the bulk of the user's leg.

2. Leg cover according to claim 1. wherein said at least one portion (3, 3a, 3b) combinable with the upper part of the legs comprises an inner comfort layer (11) that can be at least in part spaced from said outer layer (2) to define said at least one adjusting chamber (6, 6a, 6b).

3. Leg cover (1) according to any one of the preceding claims wherein said at least one adjusting chamber (6) is arranged in the proximity of the border (8, 9) between said at least one portion (3, 3a, 3b) combinable with the upper part of the user's legs and said side limbs (4a, 4b) combinable with the lower part of the legs.

4. Leg cover (1) according to any one of the preceding claims, comprising means (12) for reversibly adjusting the expansion and the contraction of said at least one adjusting chamber (6, 6a, 6b).

5. Leg cover (1) according to claim 4, wherein said means (12) for adjusting the expansion and the contraction of said at least one adjusting chamber (6, 6a, 6b) comprise at least one expander element (14, 14a, 14b) placed inside said at least one adjusting chamber (6, 6a, 6b).

6. Leg cover (1) according to claim 4 or 5, wherein said means (12) for controlling the expansion and the contraction of said at least one adjusting chamber (6, 6a, 6b) comprise at least one valve (13) for the inflow of a fluid into said at least one adjusting chamber (6, 6a, 6b) and/or said at least one expander element (14, 14a, 14b) if it is present.

7. Leg cover (1) according to claim 5 or 6, wherein said at least one expander element (14, 14a, 14b) is removable from said at least one adjusting chamber (6, 6a, 6b).

8. Leg cover (1) according to claim 6 or 7, wherein said fluid is air.

9. Leg cover (1) according to any one of the preceding claims, wherein said at least one adjusting chamber (6, 6a, 6b) contains a synthetic insulating material.

10. Leg cover (1) according to claim 9, wherein said material is an expanded polymer.

11. Method for adapting to an user the inner conformation of a leg cover of the type provided with at least one outer layer, that is waterproof and/or thermally insulating, and comprising at least one portion combined with the upper part of the user's legs, and at least two side limbs combined with the lower part of the user's legs, as well as means for removably constraining such a leg cover to the motorcycle, and wherein the leg cover comprises at least one expandable and contractible adjusting chamber placed under the outer layer and in correspondence to the portion combinable with the upper part of the user's legs, the method comprising the steps of:
a) reversibly expanding or contracting the volume of said at least one adjusting chamber depending on the bulk of the legs of said user; and
b) arranging said leg cover in an operative position, whereby said at least one adjusting chamber is arranged in correspondence to the upper part of the legs of said user.

12. Method for adapting the inner conformation of a leg cover to an user, wherein when a new user wants to use said leg cover, the method provides the steps of:
c) reversibly expanding or contracting the volume of the said at least one adjusting chamber depending on the bulk of the new user's legs; and
d) arranging the leg cover in an operative position wherein said at least one adjusting chamber is arranged in correspondence to the upper part of the legs of said new user.
